# EUROPÄISCHE PATENTSCHRIFT

(11) **EP 3 444 151 B1**
(45) Veröffentlichungstag und Bekanntmachung des Hinweises auf die Patenterteilung: **28.09.2022**
(21) Anmeldenummer: 18184550.4
(22) Anmeldetag: 19.07.2018
(51) Int. Cl.: B60R 25/24

(54) **SICHERHEITSSYSTEM ZUR AKTIVIERUNG EINER SICHERHEITSRELEVANTEN FUNKTION BEI EINEM FAHRZEUG**
SECURE SYSTEM FOR ACTIVATING A SECURITY-RELEVANT FUNCTION IN A VEHICLE
SYSTÈME DE SÉCURITÉ DESTINÉ À L'ACTIVATION D'UNE FONCTION RELATIVE À LA SÉCURITÉ DANS UN VÉHICULE

(30) Priorität: 17.08.2017 DE 102017118746
(43) Veröffentlichungstag der Anmeldung: 20.02.2019
(73) Patentinhaber: Huf Hülsbeck & Fürst GmbH & Co. KG, 42551 Velbert (DE)
(72) Erfinder: Ziller, Boris, 40885 Ratingen (DE)
(74) Vertreter: Bals & Vogel Patentanwälte PartGmbB

(56) Entgegenhaltungen:
- EP-A2- 1 920 978
- WO-A1-99/02377
- US-A1- 2004 174 248

## Beschreibung

Die vorliegende Erfindung betrifft ein Sicherheitssystem zur Aktivierung einer sicherheitsrelevanten Funktion bei einem Fahrzeug. Ferner bezieht sich die Erfindung auf ein Verfahren zur Aktivierung einer sicherheitsrelevanten Funktion bei einem Fahrzeug.

Sicherheitssysteme von Fahrzeugen sind bekannt, bei welchen durch eine Funkkommunikation mit einem Identifikationsgeber (ID-Geber) eine Authentifizierung beim Fahrzeug erfolgen kann. Dies ermöglicht das Aktivieren einer sicherheitsrelevanten Funktion wie beispielsweise einer Entriegelung eines Schließsystems des Fahrzeuges. Hierbei kann eine Kommunikationsvorrichtung des Fahrzeuges vorgesehen sein, um einen Überwachungsbereich um das Fahrzeug bereitzustellen. Dieser Überwachungsbereich ist beispielsweise ein Bereich, in welchem ein Wecksignal empfangen werden kann, das durch die Kommunikationsvorrichtung ausgesendet wird. Durch eine Begrenzung des Überwachungsbereiches hinsichtlich der Ausdehnung (d.h. des Radius' um das Fahrzeug, in welchem das Wecksignal empfangbar ist) kann der Vorteil erzielt werden, dass ein ID-Geber außerhalb des Überwachungsbereiches nicht zur Aktivierung der sicherheitsrelevanten Funktion genutzt werden kann. Dies ist besonders relevant bei sogenannten "Keyless-Go-Systemen", bei welchen keine aktive Betätigung des ID-Gebers notwendig ist, um die Funktion freizugeben. Vielmehr erfolgen die Authentifizierung und die Aktivierung der sicherheitsrelevanten Funktion bereits bei Annäherung an das Fahrzeug, was beispielsweise durch Annäherungssensoren im Türgriff detektiert wird.

Allerdings ist es oft technisch aufwendig diverse Sicherheitsrisiken eines solchen Keyless-Go-Systems zu reduzieren. So kann es beispielsweise möglich sein, dass ein Benutzer mit dem ID-Geber sich auch dann im Überwachungsbereich aufhält, wenn die Aktivierung der sicherheitsrelevanten Funktion nicht erwünscht ist. Auch sind Mechanismen bekannt, um die Lokalisation des ID-Gebers im Überwachungsbereich vorzutäuschen (bspw. sogenannte "Relay-Station-Attacks").

Ein gattungsgemäßes System zur Aktivierung sicherheitsrelevanter Funktionen bei einem Fahrzeug kann der internationalen Patentanmeldung WO 99/02377 A1 entnommen werden.

Es ist Aufgabe der vorliegenden Erfindung, die voranstehend beschriebenen Nachteile zumindest teilweise zu reduzieren. Insbesondere ist es eine Aufgabe der vorliegenden Erfindung, eine verbesserte und/oder einfachere und/oder kostengünstigere Möglichkeit bereitzustellen, die Sicherheit bei einem Sicherheitssystem eines Fahrzeuges zu erhöhen.

Die voranstehende Aufgabe wird gelöst durch ein Sicherheitssystem mit den Merkmalen des unabhängigen Systemanspruchs, durch einen Identifikationsgeber mit den Merkmalen des nebengeordneten Vorrichtungsanspruchs und durch ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Sicherheitssystem beschrieben sind, selbstverständlich auch im Zusammenhang mit dem erfindungsgemäßen Identifikationsgeber und dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Sicherheitssystem zur Aktivierung wenigstens einer sicherheitsrelevanten Funktion bei einem Fahrzeug, wobei die Aktivierung durch eine Kommunikation mit einem mobilen Identifikationsgeber initiiert werden kann. Als sicherheitsrelevante Funktion kommt bspw. die Aktivierung einer Schließvorrichtung des Fahrzeuges in Frage, wie eine Entriegelung des Fahrzeuges bei Annäherung und Authentifizierung eines Identifikationsgebers. Entsprechend kann das Sicherheitssystem als ein Keyless-Go-System oder dergleichen ausgeführt sein, welches die Entriegelung ohne den Einsatz mechanischer Schlüssel nur aufgrund einer Annäherungsdetektion und einer elektronischen Authentifizierung durchführen kann.

Gemäß einem weiteren Vorteil umfasst das erfindungsgemäße Sicherheitssystem zumindest eine der nachfolgenden Komponenten:
- wenigstens eine erste Kommunikationsvorrichtung des Fahrzeuges zur Bereitstellung eines ersten Überwachungsbereiches, insbesondere zur Überwachung des ersten Überwachungsbereiches, um vorzugsweise anhand einer ersten Kommunikation mit dem Identifikationsgeber die sicherheitsrelevante Funktion zu aktivieren,
- wenigstens eine zweite Kommunikationsvorrichtung des Fahrzeuges zur Bereitstellung eines zweiten Überwachungsbereiches, insbesondere zur Überwachung des zweiten Überwachungsbereiches, welcher sich vom ersten Überwachungsbereich unterscheidet, um anhand einer zweiten Kommunikation mit dem Identifikationsgeber eine Bereitschaft zur ersten Kommunikation zu aktivieren.

In anderen Worten kann durch die erste Kommunikationsvorrichtung die erste Kommunikation nur dann durchgeführt werden, wenn die Bereitschaft zur ersten Kommunikation aktiviert ist. Entsprechend kann die sicherheitsrelevante Funktion ggf. auch nur dann aktiviert werden, wenn die Bereitschaft zur ersten Kommunikation aktiviert ist und z. B. noch eine weitere Bedingung eintritt (wie eine erfolgreiche Authentifizierung durch die erste Kommunikation). Die Bereitschaft zur ersten Kommunikation kann wiederrum durch die zweite Kommunikation aktiviert werden. Es entsteht somit eine Art kaskadierende Freischaltung der verschiedenen Kommunikationsarten (d. h. der ersten und zweiten Kommunikation).

Hierbei ist insbesondere vorgesehen, dass die erste und zweite Kommunikationsvorrichtung zur Durchführung der jeweiligen Kommunikation als eine jeweilige Funkkommunikation gemäß unterschiedlicher Funktechnologie bzw. mit unterschiedlichen Frequenzbereichen wie z. B. LF und HF ausgeführt sind. Somit kann der Vorteil erzielt werden, dass ein mehrstufiger Sicherheitsmechanismus bereitgestellt wird, um die Sicherheit zur Aktivierung der wenigstens einen sicherheitsrelevanten Funktion deutlich zu erhöhen.

Vorteilhafterweise kann ein Angriff bei einem erfindungsgemäßen Sicherheitssystem verhindert werden, wenn die erste Kommunikation mit dem ID-Geber nie unmittelbar durchgeführt werden kann, sondern nur bei Aktivierung der Bereitschaft zur ersten Kommunikation durch die zweite Kommunikation mit dem ID-Geber. Es ist somit ein zusätzlicher Schritt notwendig, wobei das Sicherheitsniveau durch die Nutzung der unterschiedlichen Funktechnologien noch weiter erhöht werden kann. Die Nutzung von unterschiedlichen Überwachungsbereichen, welche sich z. B. hinsichtlich der Ausdehnung unterscheiden, kann sowohl die Sicherheit als auch den Komfort (insbesondere die Schnelligkeit der Authentifizierung) erhöhen. Bspw. kann bei einem größeren Ausdehnungsbereich des zweiten Überwachungsbereiches (größer als der erste Überwachungsbereich) die Bereitschaft zur ersten Kommunikation bereits aktiviert werden, bevor der Identifikationsgeber (ID-Geber) in den ersten Überwachungsbereich eintritt. Anhand der ersten Kommunikation kann dann bspw. der letzte Schritt einer Authentifizierung und/oder eine Abstandsmessung zum ID-Geber erfolgen, um die sicherheitsrelevante Funktion bspw. in Abhängigkeit von einem Codevergleich und/oder nur in einem Maximalabstand des ID-Gebers zum Fahrzeug zu aktivieren. Hierzu wird vorteilhafterweise ein Code vom ID-Geber an das Fahrzeug über die erste Kommunikation übertragen und/oder eine Signallaufzeitmessung durchgeführt.

Es ist bei dem erfindungsgemäßen Sicherheitssystem von Vorteil, wenn der ID-Geber (Identifikationsgeber) als an das Sicherheitssystem angepasstes mobiles elektrisches Gerät ausgeführt ist. Alternativ oder zusätzlich kann auch ein Mobilfunkgerät, wie beispielweise ein Smartphone, als ID-Geber eingesetzt werden. Hierzu kann das Mobilfunkgerät beispielsweise mit einem Adapter ergänzt werden, um gegebenenfalls fehlende Funktechnologien nachzurüsten. Zum Beispiel umfasst dieser Adapter eine erste und/oder eine zweite Kommunikationseinheit, insbesondere zur LF- bzw. HF- bzw. UWB-Kommunikation.

Das Fahrzeug ist beispielsweise als Personenkraftfahrzeug und/oder Elektrofahrzeug und/oder Lastkraftfahrzeug ausgebildet.

Des Weiteren ist es im Rahmen der Erfindung optional möglich, dass die erste Kommunikationsvorrichtung (und/oder eine erste Kommunikationseinheit des ID-Gebers) als eine LF- (Low Frequency) und/oder UWB- (Ultrabreitband, engl. Ultra-wideband) Kommunikationsvorrichtung (bzw. Kommunikationseinheit) ausgeführt ist, um die erste Kommunikation als eine LF- oder UWB-Kommunikation durchzuführen. Insbesondere liegt wenigstens eine LF-Kommunikationsfrequenz im Bereich zwischen 10 kHz (Kilohertz) bis 300 kHz. Vorteilhafterweise beträgt wenigstens eine LF-Kommunikationsfrequenz (der ersten Kommunikation) 125 kHz und/oder 20 kHz. Dabei kann es möglich sein, dass bei der ersten Kommunikation mehrere unterschiedliche Frequenzen genutzt werden, bspw. für einen ersten und zweiten Kommunikationskanal. Dadurch können vielseitige Möglichkeiten zur Authentifizierung bereitgestellt werden, wenn z. B. der erste Kommunikationskanal zum Empfangen von Signalen des Fahrzeuges durch den ID-Geber und der zweite Kommunikationskanal zum Senden von Signalen des ID-Gebers zum Fahrzeug genutzt wird. Auch eignet sich die LF-Kommunikation besonders vorteilhaft zur Wegstreckenmessung, wobei ggf. eine höhere Genauigkeit erzielt werden kann, als bspw. bei einer HF-Kommunikation. Auch kann der erste Überwachungsbereich durch das LF-Signal mit einer besonders hohen Linearität der Erstreckung bereitgestellt werden (ermöglicht einen nahezu kreisförmigen Empfangsbereich des LF-Signals und damit des ersten Überwachungsbereiches).

Bevorzugt liegt eine Mittenfrequenz im UWB-Bereich bei 5 GHz und/oder eine Bandbreite der UWB-Kommunikation im Bereich von mindestens 500 MHz bis mindestens 10 GHz, vorzugsweise mindestens 1 GHz bis mindestens 8 GHz. UWB bietet aufgrund der enormen Bandbreite einen besonders hohen Schutz vor Angriffen auf die Kommunikation.

Des Weiteren kann vorgesehen sein, dass die zweite Kommunikationsvorrichtung (und/oder eine zweite Kommunikationseinheit des ID-Gebers) als eine HF- (Hochfrequenz oder engl. high frequency bzw. radio frequency) Kommunikationsvorrichtung (bzw. Kommunikationseinheit) ausgeführt ist, um die zweite Kommunikation als eine HF-Kommunikation durchzuführen. Eine HF-Kommunikationsfrequenz liegt bspw. in einem Bereich von 3 MHz bis 30 GHz, vorzugsweise 30 MHz bis 3 GHz, bevorzugt 300 MHz bis 1 GHz, und beträgt bspw. 433 MHz oder 600 MHz oder 800 MHz oder 900 MHz. Dabei kann ein HF-Signal, bspw. ein HF-Wecksignal, besonders energiesparend durch den ID-Geber empfangen werden, wobei der Energieverbrauch einer Kommunikationseinheit des ID-Gebers zur HF-Kommunikation besonders niedrig sein kann.

Vorteilhaft ist es zudem, wenn der erste Überwachungsbereich sich vom zweiten Überwachungsbereich hinsichtlich der Ausdehnung und/oder Anordnung unterscheidet, wobei vorzugsweise der erste Überwachungsbereich eine feste Ausdehnung und/oder eine geringere Ausdehnung als der zweite Überwachungsbereich aufweist.

Damit wird gewährleistet, dass ein Benutzer mit dem ID-Geber bei einer Annäherung an das Fahrzeug zunächst in den zweiten Überwachungsbereich eintritt, und somit die Bereitschaft zur ersten Kommunikation aktiviert werden kann, bevor der Benutzer mit dem ID-Geber in den ersten Überwachungsbereich eintritt. Beispielsweise hat der erste Überwachungsbereich eine Ausdehnung bzw. einen Radius im Bereich von 0,1 m bis 20 m, vorzugsweise 4 m bis 10 m, bevorzugt 6 m bis 8 m um das Fahrzeug. Vorteilhafterweise hat der zweite Überwachungsbereich eine Ausdehnung bzw. einen Radius von 0,1 m bis 30 m, vorzugsweise 4 m bis 15 m, bevorzugt 10 m bis 20m um das Fahrzeug.

Ein weiterer Vorteil ergibt sich durch das erfindungsgemäße Sicherheitssystem, wenn der ID-Geber eine weitere Sicherheitsfunktion aufweist, welche den ID-Geber (z. B. anhand eines Bewegungssensors, welcher mit einer Umschaltvorrichtung verbunden ist) bei längerem Stillstand deaktiviert, d. h. die Bereitschaft zur ersten Kommunikation beim ID-Geber deaktiviert. Dies ist z. B. dann nützlich, wenn bei einem längeren Stillstand des ID-Gebers davon ausgegangen werden kann, dass eine Aktivierung der sicherheitsrelevanten Funktion nicht erfolgen soll. Bspw. kann in diesem Fall der ID-Geber durch den Benutzer abgelegt werden, wenn das Fahrzeug nicht genutzt wird. Eine Relay-Station-Attack kann hierdurch auch effektiv verhindert werden, da bei deaktivierter Bereitschaft zur ersten Kommunikation auch kein (Funk-) Wecksignal der ersten Kommunikation an den ID-Geber oder ein (Funk-) Signal des ID-Gebers an das Fahrzeug übertragen werden kann.

Besonders vorteilhaft ist es darüber hinaus, wenn zur Aktivierung der Bereitschaft zur ersten Kommunikation kumulativ sowohl als erste Bedingung die Bewegung des ID-Gebers detektiert werden muss (z. B. durch den Bewegungssensor des ID-Gebers) und als zweite Bedingung die zweite Kommunikation erfolgreich erfolgen muss (z. B. festgestellt durch eine Umschaltvorrichtung). In diesem Fall kann zuverlässig gewährleistet werden, dass der ID-Geber nicht nur in Bewegung ist, sondern auch noch sich im zweiten Überwachungsbereich aufhält. Dadurch wird auch die Situation berücksichtigt, dass der ID-Geber bspw. bewegt wird, jedoch eine Aktivierung der Funktion des Sicherheitssystems dennoch nicht erwünscht ist (z. B. hält sich der Benutzer mit dem ID-Geber in der Nähe zum Fahrzeug auf, ohne sich dem Fahrzeug bis in den zweiten Überwachungsbereich zu nähern). Ohne die Aktivierung der Bereitschaft zur ersten Kommunikation aufgrund der zweiten Kommunikation würde sonst in diesem Fall dennoch eine Relay-Station-Attack möglich sein, da die Kommunikationsbereitschaft nicht durch den Bewegungssensor deaktiviert werden kann. Alternativ kann es möglich sein, dass die zweite Bedingung eine höhere Priorität aufweist als die erste Bedingung, sodass bei erfolgreicher zweiter Kommunikation immer die Bereitschaft zur ersten Kommunikation hergestellt wird. Damit die zweite Kommunikation erfolgreich ist, muss bspw. erfolgreich eine Authentifizierung über die zweite Kommunikation erfolgen.

Ferner kann im Rahmen der Erfindung vorgesehen sein, dass der zweite Überwachungsbereich eine variable Ausdehnung aufweist, welche bevorzugt durch eine Kontrollvorrichtung in Abhängigkeit von einer Ausdehnungsvorgabe einstellbar ist.

Die Ausdehnungsvorgabe umfasst beispielsweise einen konkreten Wert für die Ausdehnung und/oder einen Algorithmus, um diesen Wert zu bestimmen. Beispielsweise kann durch den Algorithmus die zweite Kommunikation des Fahrzeuges mit dem ID-Geber ausgewertet werden und/oder festgestellt werden zu welchen (Tages-) Zeiten der ID-Geber aktiviert und/oder deaktiviert wird. Die Aktivierung und/oder Deaktivierung der Bereitschaft zur ersten Kommunikation des ID-Gebers erfolgt beispielsweise automatisch durch den ID-Geber selber, z. B. in Abhängigkeit von der Erfassung eines Bewegungssensors, beispielsweise eines Stillstandes des ID-Gebers für eine bestimmte Zeitdauer. Wird nun durch den Algorithmus festgestellt, dass die Bereitschaft zur ersten Kommunikation des ID-Gebers (z. B. gemäß einer vorgegebenen Häufigkeit) deaktiviert wird und sich der ID-Geber dennoch im zweiten Überwachungsbereich befindet kann die Ausdehnung gegebenenfalls verringert werden. In anderen Worten kann ein Lernmechanismus bereitgestellt werden, welcher erkennt, wenn der ID-Geber regelmäßig im zweiten Überwachungsbereich stillsteht und somit deaktiviert wird. Dies kann z. B. darauf hindeuten, dass das Fahrzeug nachts in der Nähe einer Schlüsselablage geparkt wird, und somit die Ausdehnung des zweiten Überwachungsbereiches zu groß ist. Entsprechend kann durch den Algorithmus die Ausdehnung des Überwachungsbereiches angepasst, insbesondere reduziert, werden, beispielsweise soweit bis die regelmäßige Deaktivierung des ID-Gebers im zweiten Überwachungsbereich ausbleibt.

Optional kann es vorgesehen sein, dass eine Speichervorrichtung vorgesehen ist, um einen Verlauf über eine Kommunikation und/oder Verbindung zwischen dem Identifikationsgeber und wenigstens einer der Kommunikationsvorrichtungen gemäß der ersten und/oder zweiten Kommunikation zu speichern, wobei die Kontrollvorrichtung zur Auswertung des Kommunikationsverlaufs und Anpassung einer variablen Ausdehnung des zweiten Überwachungsbereiches anhand der Auswertung mit der Speichervorrichtung verbunden ist. Beispielsweise können Informationen der Speichervorrichtung durch den Algorithmus genutzt werden, um einen Lernmechanismus bereitzustellen.

Ein weiterer Vorteil im Rahmen der Erfindung ist erzielbar, wenn der erste Überwachungsbereich eine maximale Ausdehnung in einem Bereich von 0,1 m bis 20 m, vorzugsweise 1 m bis 10 m, bevorzugt 4 m bis 6 m, um das Fahrzeug aufweist, sodass vorzugsweise die erste Kommunikation durchführbar ist, wenn sich der Identifikationsgeber in unmittelbarer Nähe zum Fahrzeug befindet. Beispielsweise kann die erste Kommunikation dann initiiert werden, wenn eine Annäherung durch einen Annäherungssensor, z. B. in einem Türgriff und/oder in einem Heckbereich und/oder in einem Türschweller des Fahrzeuges, detektiert wird. Beispielsweise greift der Benutzer mit seiner Hand in eine Türgriffmulde, was durch einen Annäherungssensor des Türgriffes erfasst wird. Entsprechend kann dann die erste Kommunikation initiiert werden, um eine Authentifizierung mit dem ID-Geber durchzuführen. Bei erfolgreicher Authentifizierung kann dann beispielsweise eine Schließvorrichtung des Fahrzeuges entriegelt werden und/oder eine Türverriegelung entriegelt werden, sodass der Benutzer die Tür öffnen kann.

In einer weiteren Möglichkeit kann vorgesehen sein, dass der zweite Überwachungsbereich eine maximale Ausdehnung in einem Bereich von 0,1 m bis 30 m, vorzugsweise 1 m bis 20 m, bevorzugt 2 m bis 4 m, um das Fahrzeug aufweist, sodass vorzugsweise die zweite Kommunikation durchführbar ist, wenn der Identifikationsgeber sich dem Fahrzeug annähert. Insbesondere ist dieser Bereich anpassbar, z. B. durch eine manuelle Anpassung und/oder durch eine automatisierte Anpassung (z. B. durch einen Algorithmus bzw. einen Lernmechanismus).

Nach einer weiteren Möglichkeit kann vorgesehen sein, dass mehrere Antennen der ersten Kommunikationsvorrichtung am Fahrzeug vorgesehen sind, insbesondere im Bereich wenigstens eines Türgriffs des Fahrzeuges, und der erste Überwachungsbereich durch eine Ansteuerung dieser Antennen bewirkbar ist, sodass vorzugsweise eine Anordnung des ersten Überwachungsbereiches von der Anordnung der Antennen abhängig ist, und sich bevorzugt von einer Anordnung des zweiten Überwachungsbereiches unterscheidet. Bspw. kann die Anordnung der Antennen am Türgriff (z. B. links und rechts am Fahrzeug) und/oder im Bereich der Fahrzeugmitte (z. B. an der Handbremse und/oder am Dach) und/oder am Heck (z. B. im Kofferraum) vorgesehen sein. Insbesondere bewirkt dabei die Nutzung mehrerer Antennen, dass der erste Überwachungsbereich nicht kreisrund ausgeführt ist, sondern sich im Umfeld unterschiedlicher Fahrzeugkomponenten, wie dem Türgriff oder der Heckklappe, erstreckt. Dies hat den Vorteil, dass der Aktivierungsbereich für die Funktion des Sicherheitssystems sehr genau bestimmt werden kann.

Ferner kann es im Rahmen der Erfindung vorgesehen sein, dass eine Sensorvorrichtung, vorzugsweise ein Annäherungssensor oder ein Bewegungssensor, am Fahrzeug angeordnet ist, um eine Aktivierungshandlung eines Benutzers am Fahrzeug zu detektieren, sodass nur bei positiver Detektion und der aktivierten Bereitschaft zur ersten Kommunikation die erste Kommunikation mit dem Identifikationsgeber durchführbar ist, um insbesondere eine Sicherheitsinformation zwischen dem Fahrzeug und dem Identifikationsgeber über die erste Kommunikation auszutauschen. Dies ermöglicht beispielsweise eine komfortable Türöffnung bei einem Keyless-Go-System.

Optional kann es vorgesehen sein, dass das Sicherheitssystem den Identifikationsgeber umfasst, wobei der Identifikationsgeber zumindest die nachfolgenden Komponenten umfasst:
- eine erste Kommunikationseinheit zur ersten Kommunikation mit der ersten Kommunikationsvorrichtung, und/oder
- eine zweite Kommunikationseinheit zur zweiten Kommunikation mit der zweiten Kommunikationsvorrichtung, und/oder
- eine Umschaltvorrichtung zur Aktivierung und Deaktivierung der ersten Kommunikationseinheit in Abhängigkeit von der zweiten Kommunikation.

Die erste Kommunikationseinheit ist beispielsweise zur LF- und/oder UWB-Kommunikation ausgeführt. Die zweite Kommunikationseinheit ist beispielsweise zur HF-Kommunikation ausgeführt. Die Umschaltvorrichtung kann vorteilhafterweise mit einem Bewegungssensor des ID-Gebers verbunden sein, um bei einem längeren Stillstand die erste Kommunikationseinheit und damit die Bereitschaft zur ersten Kommunikation zu deaktivieren. Auch kann es möglich sein, dass die Umschaltvorrichtung mit der zweiten Kommunikationseinheit verbunden ist, um bei einer zweiten Kommunikation, insbesondere einer erfolgreichen zweiten Kommunikation, die erste Kommunikationseinheit zu aktivieren und damit die Bereitschaft zur ersten Kommunikation zu aktivieren. Vorteilhafterweise kann die Umschaltvorrichtung auch dazu ausgeführt sein, eine Authentifizierung zumindest teilweise, insbesondere anhand der zweiten Kommunikation, durchzuführen. Beispielsweise kann die Umschaltvorrichtung hierzu ein erstes Signal der zweiten Kommunikation vom Fahrzeug empfangen und/oder verarbeiten und/oder darauf basierend ein zweites Signal an das Fahrzeug zurücksenden, welches beispielsweise einen Code oder dergleichen umfasst. Gegebenenfalls kann eine solche Authentifizierung auch über die erste Kommunikation durch die Umschaltvorrichtung durchgeführt werden. Hierzu kann die Umschaltvorrichtung gegebenenfalls auch unterschiedliche Kommunikationskanäle der ersten und/oder zweiten Kommunikation nutzen. Auch kann es möglich sein, dass die die Umschaltvorrichtung dazu ausgeführt ist, ein Wecksignal der zweiten Kommunikation zu identifizieren, um bei Empfang des Wecksignals die erste Kommunikationseinheit zu aktivieren.

Ein weiterer Vorteil im Rahmen der Erfindung ist erzielbar, wenn die Umschaltvorrichtung dazu ausgeführt ist, in
- einem Normalzustand bei ausbleibender zweiter Kommunikation, vorzugsweise bei ausbleibender Kommunikationsverbindung der zweiten Kommunikationseinheit mit der zweiten Kommunikationsvorrichtung, die erste Kommunikationseinheit in Abhängigkeit von einer Deaktivierungsvorgabe zu deaktivieren, und in
- einem Kommunikationszustand bei erfolgreicher zweiter Kommunikation die erste Kommunikationseinheit zu aktivieren, um die Bereitschaft zur ersten Kommunikation zu aktivieren.

Bspw. ist hierbei die Deaktivierungsvorgabe eine Zeitvorgabe oder dergleichen. So kann nach einem Erreichen der Zeitvorgabe, also nach einer bestimmten Zeitdauer, in der die zweite Kommunikation ausbleibt, die Deaktivierung durchgeführt werden. Damit kann die Sicherheit beim Betrieb des Sicherheitssystems weiter erhöht werden.

Gemäß einer vorteilhaften Weiterbildung der Erfindung kann vorgesehen sein, dass der Identifikationsgeber einen Bewegungssensor zu Detektion einer Bewegung des Identifikationsgebers aufweist, um bei einer positiven Bewegungsdetektion eine Bereitschaft des Identifikationsgebers zur ersten Kommunikation zu aktivieren, und vorzugsweise andernfalls in Abhängigkeit von einer Deaktivierungsvorgabe zu deaktivieren. Insbesondere kann dabei die Möglichkeit zum Deaktivieren der Bereitschaft zur ersten Kommunikation durch den Bewegungssensor und der Umschaltvorrichtung parallel existieren, wohingegen die Aktivierung der Bereitschaft zur ersten Kommunikation nur dann möglich ist, wenn sowohl die Bewegungsdetektion positiv erfolgt als auch die Umschaltvorrichtung eine erfolgreiche zweite Kommunikation detektiert. Bspw. kann hierzu die Umschaltvorrichtung elektrisch mit dem Bewegungssensor verbunden sein, um die Aktivierung der Bereitschaft nur dann durchzuführen, wenn auch der Bewegungssensor eine Bewegung meldet.

Als eine Weiterentwicklung kann es von Vorteil sein, wenn die Deaktivierungsvorgabe eine minimale Zeitdauer ist, in welcher ein Stillstand des ID-Gebers detektiert wird, um dann die erste Kommunikationseinheit zu deaktivieren. Hierzu kann die Umschaltvorrichtung einen Zeitgeber und/oder einen Timer aufweisen oder mit einem solchen elektrisch verbunden sein.

Des Weiteren kann es vorteilhaft sein, wenn der ID-Geber zumindest ein 3-Antennen-System, insbesondere mit drei orthogonal angeordneten Spulen, für die erste Kommunikation umfasst. Bspw. ist das 3-Antennen-System Teil der ersten Kommunikationseinheit. So ist es möglich, dass der ID-Geber auch eine Neigung und/oder Richtung des ID-Gebers detektiert, in welche der ID-Geber ausgerichtet wird. Dies ermöglicht eine verbesserte, lageunabhängige Distanzmessung mit hoher Zuverlässigkeit.

Ebenfalls Gegenstand der Erfindung ist ein Identifikationsgeber, insbesondere ein mobiler Identifikationsgeber, zur Aktivierung einer sicherheitsrelevanten Funktion bei einem Fahrzeug, wobei der Identifikationsgeber zumindest die nachfolgenden Komponenten umfasst:
- eine erste Kommunikationseinheit zur ersten Kommunikation mit einer ersten Kommunikationsvorrichtung des Fahrzeuges, insbesondere gemäß einem erfindungsgemäßen System und/oder Verfahren,
- eine zweite Kommunikationseinheit zur zweiten Kommunikation mit einer zweiten Kommunikationsvorrichtung des Fahrzeuges, insbesondere gemäß einem erfindungsgemäßen System und/oder Verfahren,
- eine Umschaltvorrichtung (430) zur Aktivierung und Deaktivierung der ersten Kommunikationseinheit (440) in Abhängigkeit von der zweiten Kommunikation, vorzugsweise gemäß einem erfindungsgemäßen System und/oder Verfahren.

Damit bringt der erfindungsgemäße Identifikationsgeber (ID-Geber) die gleichen Vorteile mit sich, wie sie ausführlich mit Bezug auf ein erfindungsgemäßes System beschrieben worden sind.

Ebenfalls Gegenstand der Erfindung ist ein Verfahren zur Aktivierung einer sicherheitsrelevanten Funktion bei einem Fahrzeug durch eine Kommunikation mit einem mobilen Identifikationsgeber, vorzugweise zur Aktivierung einer Schließvorrichtung des Fahrzeuges.

Hierbei ist insbesondere vorgesehen, dass wenigstens einer der nachfolgenden Schritte durchgeführt wird, vorzugsweise nacheinander oder in beliebiger Reihenfolge, wobei einzelne Schritte auch wiederholt ausgeführt werden können:
- Durchführen einer ersten Kommunikation über wenigstens eine erste Kommunikationsvorrichtung des Fahrzeuges in einem ersten Überwachungsbereich in Abhängigkeit von einer Bereitschaft zur ersten Kommunikation, bevorzugt nur dann, wenn die Bereitschaft zur ersten Kommunikation aktiviert ist,
- Aktivieren der sicherheitsrelevanten Funktion anhand der ersten Kommunikation, vorzugsweise anhand einer Authentifizierung mit dem ID-Geber,
- Durchführen einer zweiten Kommunikation über wenigstens eine zweite Kommunikationsvorrichtung des Fahrzeuges in einem zweiten Überwachungsbereich, welcher sich vom ersten Überwachungsbereich unterscheidet,
- Aktivieren der Bereitschaft zur ersten Kommunikation bei einer erfolgreichen Kommunikationsverbindung der zweiten Kommunikation, vorzugsweise einer erfolgreichen Kommunikationsverbindung mit einer zweiten Kommunikationseinheit des ID-Gebers, bevorzugt wenn eine Weckbedingung, wie eine erfolgreiche Authentifizierung anhand der zweiten Kommunikation, vorliegt.

Damit bringt das erfindungsgemäße Verfahren die gleichen Vorteile mit sich, wie sie ausführlich mit Bezug auf ein erfindungsgemäßes Sicherheitssystem beschrieben worden sind. Zudem kann das Verfahren geeignet sein, ein erfindungsgemäßes Sicherheitssystem und/oder einen erfindungsgemäßen ID-Geber zu betreiben.

Optional kann dabei eine Weckbedingung genutzt werden, welche zur Aktivierung der Bereitschaft zur ersten Kommunikation genutzt wird. Bspw. liegt die Weckbedingung dann vor, wenn erfolgreich ein Wecksignal von der zweiten Kommunikationsvorrichtung des Fahrzeuges an die zweite Kommunikationseinheit des ID-Gebers übertragen wurde. Bspw. umfasst das Wecksignal auch einen Code, sodass eine erfolgreiche Codeüberprüfung erfolgen muss, damit die Weckbedingung vorliegt (Authentifizierung). Dies kann z. B. durch den ID-Geber durchgeführt werden, und bei vorliegender Weckbedingung kann eine erste Kommunikationseinheit des ID-Gebers durch eine Umschaltvorrichtung aktiviert werden, um die Bereitschaft zur ersten Kommunikation zu aktivieren.

Es kann weiter möglich sein, dass zur Initiierung der zweiten Kommunikation ein Wecksignal, vorzugsweise Pollingsignal, über die zweite Kommunikationsvorrichtung ausgesendet wird. Als Polling wird hierbei verstanden, dass in regelmäßigen zeitlichen Abständen (wie bspw. 0,1 s bis 2 s) das Wecksignal ausgesendet wird. Dadurch kann der Komfort bei dem erfindungsgemäßen Verfahren deutlich erhöht werden.

Auch ist es optional denkbar, dass durch die erste Kommunikation eine Wegstreckenmessung zwischen Fahrzeug und Identifikationsgeber durchgeführt wird, insbesondere durch eine Feldstärkenmessung, und vorzugsweise mit einer Sicherheitsvorgabe verglichen wird, um in Abhängigkeit von dem Vergleich die sicherheitsrelevante Funktion zu aktivieren. Bspw. ist die Sicherheitsvorgabe eine Maximaldistanz des ID-Gebers zum Fahrzeug, bspw. zu einem Türgriff oder einer Heckklappe. Dies ermöglicht es, zuverlässig ein Keyless-Go System zu betreiben und die Sicherheit zu erhöhen.

Als weitere die Erfindung verbessernde Maßnahme kann es vorgesehen sein, dass eine Energieversorgung für die erste Kommunikationseinheit und die zweite Kommunikationseinheit durch einen Energiespeicher des Identifikationsgebers bereitgestellt wird, wobei die Energieversorgung für die erste Kommunikationseinheit größer ist als für die zweite Kommunikationseinheit. In anderen Worten kann eine energiesparende zweite Kommunikationseinheit bereitgestellt werden. Insbesondere ist die zweite Kommunikationseinheit des ID-Gebers stets aktiv und/oder in Bereitschaft, wohingegen die erste Kommunikationseinheit regelmäßig deaktiviert wird. Damit ist eine deutliche Energieeinsparung möglich.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
- Fig. 1: eine schematische Darstellung eines Fahrzeuges in einer Seiten- und Draufansicht,
- Fig. 2: eine schematische Darstellung eines Identifikationsgebers,
- Fig. 3: eine schematische Draufsicht auf ein Fahrzeug mit Kennzeichnung der Überwachungsbereiche,
- Fig. 4: eine weitere Darstellung der Überwachungsbereiche,
- Fig. 5: eine weitere Darstellung der Überwachungsbereiche.

In den nachfolgenden Figuren werden für die gleichen technischen Merkmale auch von unterschiedlichen Ausführungsbeispielen die identischen Bezugszeichen verwendet.

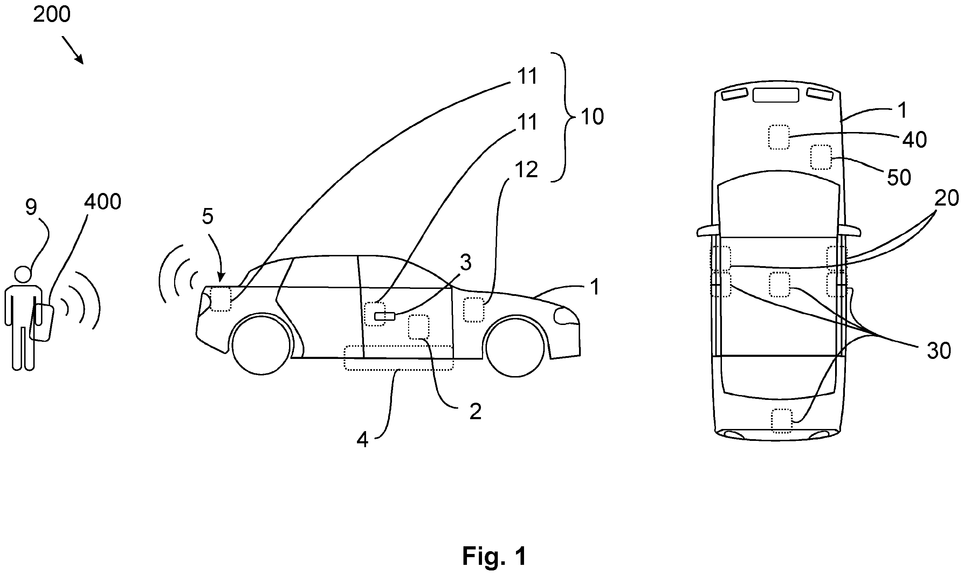

In Figur 1 ist schematisch ein Fahrzeug 1 dargestellt, weiches zumindest Teile eines erfindungsgemäßen Sicherheitssystems 200 aufweisen kann. Ebenfalls Teil des erfindungsgemäßen Sicherheitssystems 200 kann ein Identifikationsgeber 400 sein, welcher beispielsweise durch einen Benutzer 9 getragen wird. Somit kann der Identifikationsgeber 400 mobil, d. h. tragbar, ausgeführt sein. Ferner ist schematisch eine Schließvorrichtung 2, ein Türgriff 3, ein Türschweller 4 sowie eine Heckklappe 5 des Fahrzeuges 1 gezeigt. In der Draufsicht auf das Fahrzeug 1 ist zudem eine Anordnung von Antennen 30 dargestellt, welche beispielsweise zur ersten und/oder zweiten Kommunikation dienen. Beispielsweise kann die erste Kommunikation C1 bei Detektion einer Annäherung durch wenigstens einen Annäherungssensor 20 initiiert werden, sofern eine Bereitschaft zur ersten Kommunikation C1 aktiviert ist. Die erste Kommunikation C1 wird dabei beispielsweise durch, wenigstens eine, erste Kommunikationsvorrichtung 11 eines Kommunikationssystems 10 des Fahrzeuges 1 bereitgestellt, wobei wenigstens ein Empfangsbereich der ersten Kommunikation C1 den ersten Überwachungsbereich 110 bildet. In Figur 1 sind beispielhaft zwei Kommunikationsvorrichtungen 11 gezeigt, sodass unterschiedliche Bereiche den ersten Überwachungsbereich 110 bilden. Um die Bereitschaft zur ersten Kommunikation zu aktivieren, kann eine zweite Kommunikation C2 durch eine zweite Kommunikationsvorrichtung 12 des Kommunikationssystems 10 bereitgestellt werden. Auch hierbei kann ein Empfangsbereich der zweiten Kommunikation C2 den zweiten Überwachungsbereich 120 bilden. Die Ausdehnung des ersten und/oder zweiten Überwachungsbereichs 110, 120 kann gemäß einem weiteren Vorteil durch wenigstens eine Kontrollvorrichtung 50 bestimmt werden, weiche hierzu beispielsweise mit einer Speichervorrichtung 40 verbunden ist. Entsprechend kann die Ausdehnung des ersten und/oder zweiten Überwachungsbereiches 110, 120 durch eine Vorgabe, welche in der Speichervorrichtung 40 gespeichert ist, durch die Kontrollvorrichtung 50 variabel angepasst werden.

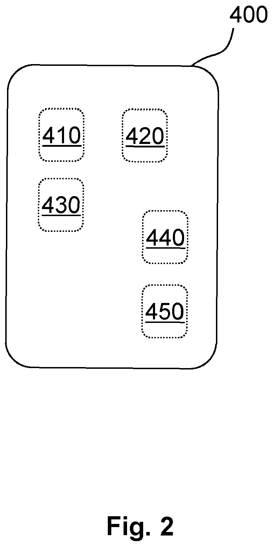

In Figur 2 ist schematisch ein erfindungsgemäßer Identifikationsgeber 400 gezeigt, welcher einen Bewegungssensor 410 und/oder einen Energiespeicher 420 und/oder eine Umschaltvorrichtung 430 und/oder eine erste Kommunikationseinheit 440 und/oder eine zweite Kommunikationseinheit 450 aufweist.

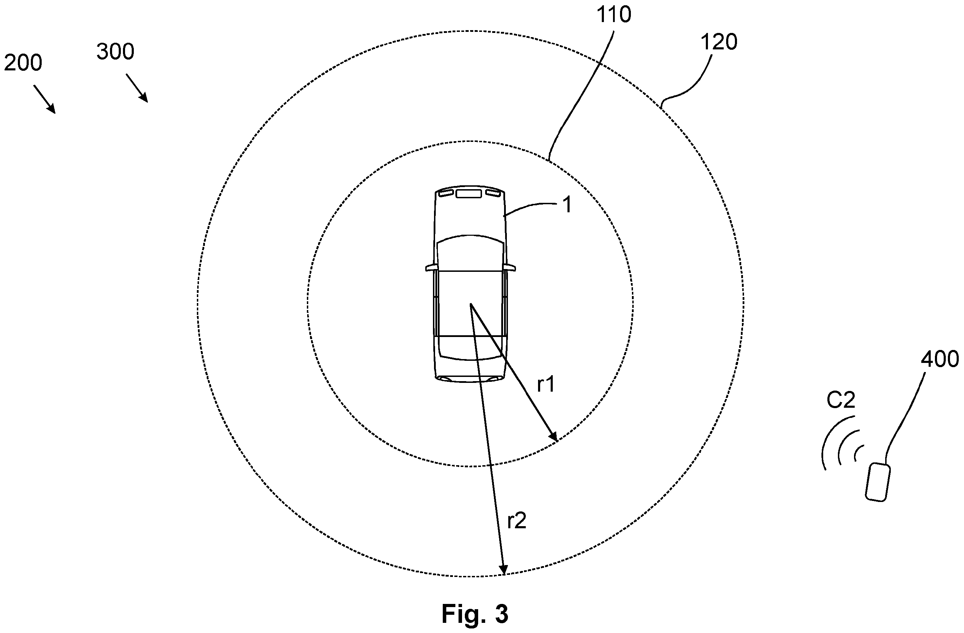

In Figur 3 bis Figur 5 ist, auch zur Visualisierung eines erfindungsgemäßen Verfahrens 300, schematisch ein erster und zweiter Überwachungsbereich 110, 120 gezeigt, wobei die tatsächliche Ausdehnung der Überwachungsbereiche gegebenenfalls von einer exakten Kreisform abweichen kann. Die Erstreckung, insbesondere Ausdehnung, des ersten und zweiten Überwachungsbereiches 110, 120 kann beispielsweise durch einen ersten und zweiten Radius r1, r2 angegeben werden, welche beispielsweise den durchschnittlichen Radius betreffen (bei einer Abweichung von der exakten Kreisform), In Figur 3 ist dargestellt, dass sich der Identifikationsgeber 400 außerhalb des ersten und zweiten Überwachungsbereiches 110, 120 befindet, sodass weder eine erste Kommunikation C1 noch eine zweite Kommunikation C2 möglich ist. Daher ist auch eine Bereitschaft zur ersten Kommunikation C1 deaktiviert, wohingegen eine zweite Kommunikation C2 sich in Bereitschaft befindet, um gegebenenfalls ein Wecksignal des Fahrzeuges zu empfangen.

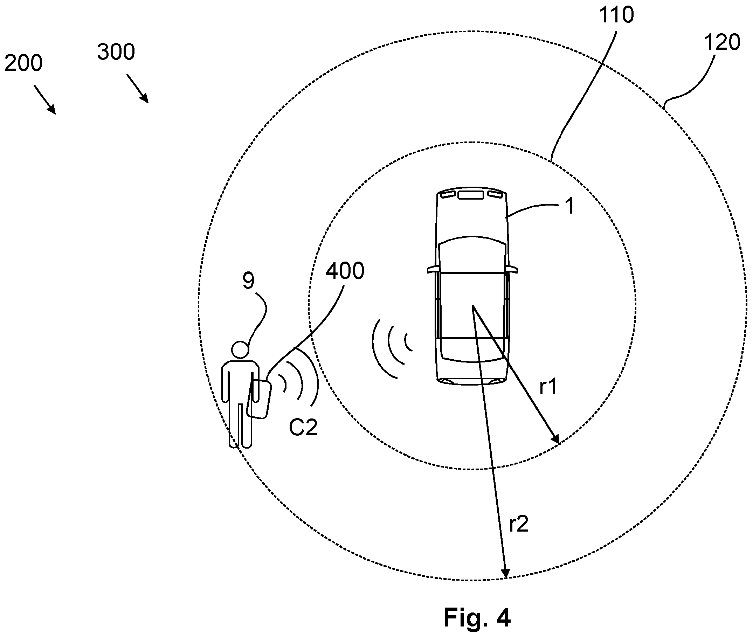

In Figur 4 ist dargestellt, dass ein Benutzer 9 mit dem Identifikationsgeber 400 in den zweiten Überwachungsbereich 120 eintritt, nicht jedoch in den ersten Überwachungsbereich 110. Hier ist nun die zweite Kommunikation C2 möglich, d. h. ein Wecksignal des Fahrzeuges 1 kann empfangen werden. Beispielsweise kann nun (gegebenenfalls in Abhängigkeit von weiteren Bedingungen, wie einer Bewegung des Identifikationsgebers 400, welche durch den Bewegungssensor 410 festgestellt wird und/oder einer Authentifizierung) die Bereitschaft zur ersten Kommunikation C1 aktiviert werden.

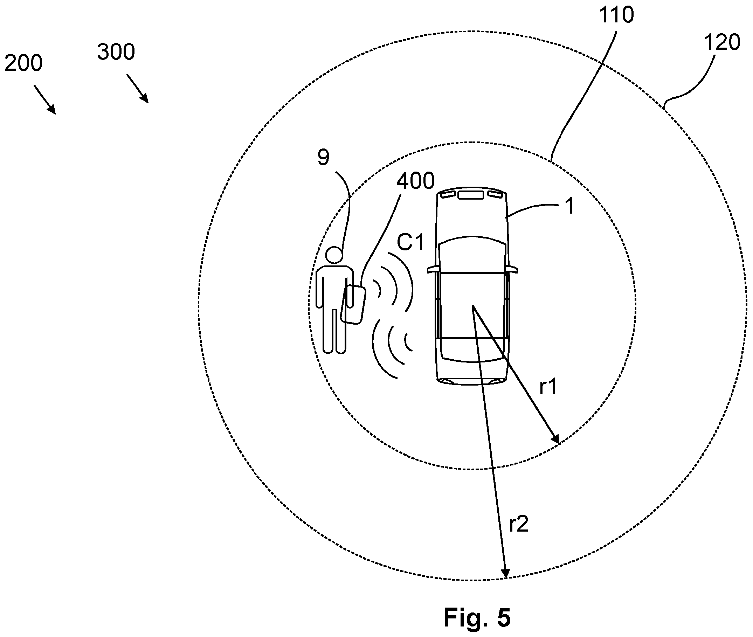

In Figur 5 ist gezeigt, dass der Benutzer 9 weiter sich dem Fahrzeug 1 nähert, sodass der Identifikationsgeber 400 in den ersten Überwachungsbereich 110 eintritt. Da nun die Bereitschaft zur ersten Kommunikation C1 aktiviert ist, kann die erste Kommunikation C1, beispielsweise zur Authentifizierung, stattfinden. Dies ermöglicht die Aktivierung der sicherheitsrelevanten Funktion des Sicherheitssystems 200.

### Bezugszeichenliste

- 1: Fahrzeug
- 2: Schließvorrichtung
- 3: Türgriff
- 4: Schweller
- 5: Heckklappe
- 9: Benutzer

- 10: Kommunikationssystem
- 11: erste Kommunikationsvorrichtung
- 12: zweite Kommunikationsvorrichtung

- 20: Sensorvorrichtung, Annäherungssensor, Bewegungssensor
- 30: Antennen
- 40: Speichervorrichtung
- 50: Kontrollvorrichtung
- 110: erster Überwachungsbereich, LF-Überwachungsbereich
- 120: zweiter Überwachungsbereich, HF-Überwachungsbereich
- 200: Sicherheitssystem
- 300: Verfahren

- 400: Identifikationsgeber
- 410: Bewegungssensor
- 420: Energiespeicher
- 430: Umschaltvorrichtung

- 440: erste Kommunikationseinheit
- 450: zweite Kommunikationseinheit

- r1: erster Radius
- r2: zweiter Radius
- C1: erste Kommunikation
- C2: zweite Kommunikation

## Patentansprüche

1. Sicherheitssystem (200) zur Aktivierung einer sicherheitsrelevanten Funktion bei einem Fahrzeug (1) durch eine Kommunikation mit einem mobilen Identifikationsgeber (400), aufweisend:
- wenigstens eine erste Kommunikationsvorrichtung (11) des Fahrzeuges (1) zur Bereitstellung eines ersten Überwachungsbereiches (110), um anhand einer ersten Kommunikation mit dem Identifikationsgeber (400) die sicherheitsrelevante Funktion zu aktivieren,
- wenigstens eine zweite Kommunikationsvorrichtung (12) des Fahrzeuges (1) zur Bereitstellung eines zweiten Überwachungsbereiches (120), welcher sich vom ersten Überwachungsbereich (110) unterscheidet, um anhand einer zweiten Kommunikation mit dem Identifikationsgeber (400) eine Bereitschaft zur ersten Kommunikation zu aktivieren,
wobei die erste und zweite Kommunikationsvorrichtung (11, 12) zur Durchführung der jeweiligen Kommunikation als eine jeweilige Funkkommunikation in unterschiedlichen Frequenzbereichen ausgeführt sind.

2. Sicherheitssystem (200) nach Anspruch 1,
**dadurch gekennzeichnet,**
**dass** die erste Kommunikationsvorrichtung (11) als eine LF- oder UWB-Kommunikationsvorrichtung (11) ausgeführt ist, um die erste Kommunikation als eine LF- oder UWB-Kommunikation durchzuführen und/oder dass die zweite Kommunikationsvorrichtung (12) als eine HF-Kommunikationsvorrichtung (12) ausgeführt ist, um die zweite Kommunikation als eine HF-Kommunikation durchzuführen.

3. Sicherheitssystem (200) nach einem der vorhergehenden Ansprüche,
**dadurch gekennzeichnet,**
**dass** der erste Überwachungsbereich (110) sich vom zweiten Überwachungsbereich (120) hinsichtlich der Ausdehnung und/oder Anordnung unterscheidet.

4. Sicherheitssystem (200) nach einem der vorhergehenden Ansprüche,
**dadurch gekennzeichnet,**
**dass** der zweite Überwachungsbereich (120) eine variable Ausdehnung aufweist, welche bevorzugt durch eine Kontrollvorrichtung (50) in Abhängigkeit von einer Ausdehnungsvorgabe einstellbar ist.

5. Sicherheitssystem (200) nach einem der vorhergehenden Ansprüche,
**dadurch gekennzeichnet,**
**dass** eine Speichervorrichtung (40) vorgesehen ist, um einen Verlauf über eine Kommunikation und/oder Verbindung zwischen dem Identifikationsgeber (400) und wenigstens einer der Kommunikationsvorrichtungen (11, 12) gemäß der ersten und/oder zweiten Kommunikation zu speichern, wobei die Kontrollvorrichtung (50) zur Auswertung des Kommunikationsverlaufs und Anpassung einer variablen Ausdehnung des zweiten Überwachungsbereiches (120) anhand der Auswertung mit der Speichervorrichtung (40) verbunden ist.

6. Sicherheitssystem (200) nach einem der vorhergehenden Ansprüche,
**dadurch gekennzeichnet,**
**dass** der erste Überwachungsbereich (110) eine maximale Ausdehnung in einem Bereich von 0,1 m bis 20 m um das Fahrzeug (1) aufweist.

7. Sicherheitssystem (200) nach einem der vorhergehenden Ansprüche,
**dadurch gekennzeichnet,**
**dass** der zweite Überwachungsbereich (120) eine maximale Ausdehnung in einem Bereich von 0,1 m bis 30 m um das Fahrzeug (1) aufweist.

8. Sicherheitssystem (200) nach einem der vorhergehenden Ansprüche,
**dadurch gekennzeichnet,**
**dass** eine Sensorvorrichtung (20) am Fahrzeug (1) angeordnet ist, um eine Aktivierungshandlung eines Benutzers (9) am Fahrzeug (1) zu detektieren, sodass nur bei positiver Detektion und der aktivierten Bereitschaft zur ersten Kommunikation die erste Kommunikation mit dem Identifikationsgeber (400) durchführbar ist.

9. Sicherheitssystem (200) nach einem der vorhergehenden Ansprüche,
**dadurch gekennzeichnet,**
**dass** das Sicherheitssystem (200) den Identifikationsgeber (400) umfasst, wobei der Identifikationsgeber (400) zumindest die nachfolgenden Komponenten umfasst:
- eine erste Kommunikationseinheit (440) zur ersten Kommunikation mit der ersten Kommunikationsvorrichtung (11),
- eine zweite Kommunikationseinheit (450) zur zweiten Kommunikation mit der zweiten Kommunikationsvorrichtung (12),
- eine Umschaltvorrichtung (430) zur Aktivierung und Deaktivierung der ersten Kommunikationseinheit (440) in Abhängigkeit von der zweiten Kommunikation, wobei die Umschaltvorrichtung (430) dazu ausgeführt ist, in
- einem Normalzustand bei ausbleibender zweiter Kommunikation die erste Kommunikationseinheit (440) in Abhängigkeit von einer Deaktivierungsvorgabe zu deaktivieren, und in
- einem Kommunikationszustand bei erfolgreicher zweiter Kommunikation die erste Kommunikationseinheit (440) zu aktivieren, um die Bereitschaft zur ersten Kommunikation zu aktivieren.

10. Sicherheitssystem (200) nach Anspruch 9,
**dadurch gekennzeichnet,**
**dass** der Identifikationsgeber (400) einen Bewegungssensor (410) zu Detektion einer Bewegung des Identifikationsgebers (400) aufweist, um bei einer positiven Bewegungsdetektion eine Bereitschaft des Identifikationsgebers (400) zur ersten Kommunikation zu aktivieren.

11. Verfahren (300) zur Aktivierung einer sicherheitsrelevanten Funktion bei einem Fahrzeug (1) durch eine Kommunikation mit einem mobilen Identifikationsgeber (400), wobei
**die nachfolgenden Schritte durchgeführt werden:**
- Durchführen einer ersten Kommunikation über wenigstens eine erste Kommunikationsvorrichtung (11) des Fahrzeuges (1) in einem ersten Überwachungsbereich (110) in Abhängigkeit von einer Bereitschaft zur ersten Kommunikation,
- Aktivieren der sicherheitsrelevanten Funktion anhand der ersten Kommunikation,
- Durchführen einer zweiten Kommunikation über wenigstens eine zweite Kommunikationsvorrichtung (12) des Fahrzeuges (1) in einem zweiten Überwachungsbereich (120), welcher sich vom ersten Überwachungsbereich (110) unterscheidet,
- Aktivieren einer Bereitschaft zur ersten Kommunikation bei einer erfolgreichen Kommunikationsverbindung der zweiten Kommunikation.

12. Verfahren (300) nach Anspruch 11,
**dadurch gekennzeichnet,**
**dass** zur Initiierung der zweiten Kommunikation ein Wecksignal über die zweite Kommunikationsvorrichtung (12) ausgesendet wird.

13. Verfahren (300) nach Anspruch 11 oder 12,
**dadurch gekennzeichnet,**
**dass** durch die erste Kommunikation eine Wegstreckenmessung zwischen dem Fahrzeug (1) und dem Identifikationsgeber (400) durchgeführt wird und dass ein Sicherheitssystem (200) nach einem der Ansprüche 1 bis 10 betrieben wird.

## Claims

1. A safety system (200) for activating a safety-related function in a vehicle (1) by communicating with a mobile identification transmitter (400), comprising:
- at least a first communication device (11) of the vehicle (1) for providing a first monitoring area (110) to activate the safety-related function on the basis of a first communication with the identification transmitter (400),
- at least one second communication device (12) of the vehicle (1) for providing a second monitoring area (120) which is different from the first monitoring area (110) in order to activate a readiness for the first communication on the basis of a second communication with the identification transmitter (400),
wherein the first and second communication devices (11, 12) for performing the respective communication are implemented as a respective radio communication in different frequency ranges.

2. Safety system (200) according to claim 1,
**characterized in that**
the first communication device (11) is implemented as an LF or UWB communication device (11) to perform the first communication as an LF or UWB communication and/or that the second communication device (12) is implemented as an RF communication device (12) to perform the second communication as an RF communication.

3. Safety system (200) according to any one of the preceding claims,
**characterized in that**
the first monitoring area (110) differs from the second monitoring area (120) in terms of the extent and/or arrangement.

4. Safety system (200) according to any one of the preceding claims,
**characterized in that**
the second monitoring area (120) has a variable extent which can preferably be set by a control device (50) as a function of a predetermined extent.

5. Safety system (200) according to any one of the preceding claims,
**characterized in that**
a memory device (40) is provided for storing a history of a communication and/or connection between the identification transmitter (400) and at least one of the communication devices (11, 12) in accordance with the first and/or second communication, the control device (50) being connected to the memory device (40) for evaluating the communication history and adapting a variable extent of the second monitoring area (120) on the basis of the evaluation.

6. Safety system (200) according to any one of the preceding claims,
**characterized in that**
the first monitoring area (110) has a maximum extent in a range from 0.1 m to 20 m around the vehicle (1).

7. Safety system (200) according to any one of the preceding claims,
**characterized in that**
the second monitoring area (120) has a maximum extent in a range from 0.1 m to 30 m around the vehicle (1).

8. Safety system (200) according to any one of the preceding claims,
**characterized in that**
a sensor device (20) is arranged on the vehicle (1) in order to detect an activation action of a user (9) on the vehicle (1), so that the first communication with the identification transmitter (400) can be carried out only in the case of positive detection and the activated readiness for the first communication.

9. Safety system (200) according to any one of the preceding claims,
**characterized in that**
the safety system (200) comprises the identification transmitter (400), wherein the identification transmitter (400) comprises at least the following components:
- a first communication unit (440) for first communication with the first communication device (11),
- a second communication unit (450) for second communication with the second communication device (12),
- a switching device (430) for activating and deactivating the first communication unit (440) in dependence on the second communication, wherein the switching device (430) is adapted to be switched in
- a normal state, deactivating the first communication unit (440) in response to a deactivation specification in the absence of a second communication, and in
- a communication state upon successful second communication to activate the first communication unit (440) to activate the readiness for first communication.

10. Safety system (200) according to claim 9,
**characterized in that**
the identification transmitter (400) comprises a motion sensor (410) for detecting a motion of the identification transmitter (400) in order to activate a readiness of the identification transmitter (400) for the first communication in case of a positive motion detection.

11. A method (300) for activating a safety-related function on a vehicle (1) by communicating with a mobile identification transmitter (400), wherein
**the following steps are performed:**
- Performing a first communication via at least a first communication device (11) of the vehicle (1) in a first monitoring area (110) depending on a readiness for the first communication,
- Activate the safety-related function based on the first communication,
- Performing a second communication via at least a second communication device (12) of the vehicle (1) in a second monitoring area (120), which is different from the first monitoring area (110),
- Activating a readiness for the first communication in case of a successful communication connection of the second communication.

12. The method (300) according to claim 11,
**characterized in that**
for initiating the second communication, a wake-up signal is transmitted via the second communication device (12).

13. Method (300) according to claim 11 or 12,
**characterized in that**
a distance measurement between the vehicle (1) and the identification transmitter (400) is performed by the first communication, and that a safety system (200) according to any one of claims 1 to 10 is operated.

## Revendications

1. Système de sécurité (200) pour l'activation d'une fonction importante pour la sécurité dans un véhicule (1) par une communication avec un transmetteur d'identification mobile (400), comprenant :
- au moins un premier dispositif de communication (11) du véhicule (1) pour fournir une première zone de surveillance (110), afin d'activer la fonction relative à la sécurité à l'aide d'une première communication avec le transmetteur d'identification (400),
- au moins un deuxième dispositif de communication (12) du véhicule (1) pour fournir une deuxième zone de surveillance (120), qui se distingue de la première zone de surveillance (110), afin d'activer une disponibilité pour la première communication à l'aide d'une deuxième communication avec le transmetteur d'identification (400),
dans lequel les premier et deuxième dispositifs de communication (11, 12) sont réalisés pour effectuer la communication respective en tant que communication radio respective dans des plages de fréquences différentes.

2. Système de sécurité (200) selon la revendication 1,
**caractérisé en ce que**
le premier dispositif de communication (11) est réalisé comme un dispositif de communication LF ou UWB (11) pour effectuer la première communication comme une communication LF ou UWB et/ou **en ce que** le deuxième dispositif de communication (12) est réalisé comme un dispositif de communication HF (12) pour effectuer la deuxième communication comme une communication HF.

3. Système de sécurité (200) selon l'une des revendications précédentes,
**caractérisé en ce que**
la première zone de surveillance (110) se distingue de la deuxième zone de surveillance (120) en termes d'étendue et/ou de disposition.

4. Système de sécurité (200) selon l'une des revendications précédentes,
**caractérisé en ce que**
la deuxième zone de surveillance (120) présente une extension variable, qui peut être réglée de préférence par un dispositif de contrôle (50) en fonction d'une consigne d'extension.

5. Système de sécurité (200) selon l'une des revendications précédentes,
**caractérisé en ce qu'**
un dispositif de mémoire (40) est prévu pour mémoriser un historique sur une communication et/ou une liaison entre le transmetteur d'identification (400) et au moins un des dispositifs de communication (11, 12) selon la première et/ou la deuxième communication, le dispositif de contrôle (50) étant relié au dispositif de mémoire (40) pour l'évaluation de l'historique de communication et l'adaptation d'une extension variable de la deuxième zone de surveillance (120) à l'aide de l'évaluation.

6. Système de sécurité (200) selon l'une des revendications précédentes,
**caractérisé en ce que**
la première zone de surveillance (110) présente une extension maximale dans une plage de 0,1 m à 20 m autour du véhicule (1).

7. Système de sécurité (200) selon l'une des revendications précédentes,
**caractérisé en ce que**
la deuxième zone de surveillance (120) présente une extension maximale dans une plage de 0,1 m à 30 m autour du véhicule (1).

8. Système de sécurité (200) selon l'une des revendications précédentes,
**caractérisé en ce qu'**
un dispositif de détection (20) est disposé sur le véhicule (1) pour détecter une action d'activation d'un utilisateur (9) sur le véhicule (1), de sorte que la première communication avec le transmetteur d'identification (400) ne peut être effectuée qu'en cas de détection positive et de disponibilité activée pour la première communication.

9. Système de sécurité (200) selon l'une des revendications précédentes,
**caractérisé en ce que**
le système de sécurité (200) comprend le transmetteur d'identification (400), le transmetteur d'identification (400) comprenant au moins les composants suivants :
- une première unité de communication (440) pour une première communication avec le premier dispositif de communication (11),
- une deuxième unité de communication (450) pour une deuxième communication avec le deuxième dispositif de communication (12),
- un dispositif de commutation (430) pour activer et désactiver la première unité de communication (440) en fonction de la seconde communication, le dispositif de commutation (430) étant adapté pour
- dans un état normal, en l'absence d'une deuxième communication, désactiver la première unité de communication (440) en fonction d'une consigne de désactivation, et
- dans un état de communication lorsque la deuxième communication est réussie, activer la première unité de communication (440) afin d'activer la disponibilité pour la première communication.

10. Système de sécurité (200) selon la revendication 9,
**caractérisé en ce que**
le transmetteur d'identification (400) présente un capteur de mouvement (410) pour la détection d'un mouvement du transmetteur d'identification (400), afin d'activer une disponibilité du transmetteur d'identification (400) pour la première communication en cas de détection de mouvement positive.

11. Procédé (300) d'activation d'une fonction importante pour la sécurité d'un véhicule (1) par une communication avec un transmetteur d'identification mobile (400), dans lequel **les étapes suivantes étant effectuées:**
- Effectuer une première communication via au moins un premier dispositif de communication (11) du véhicule (1) dans une première zone de surveillance (110) en fonction d'une disponibilité pour la première communication,
- Activation de la fonction importante pour la sécurité à l'aide de la première communication,
- Effectuer une deuxième communication via au moins un deuxième dispositif de communication (12) du véhicule (1) dans une deuxième zone de surveillance (120) qui est différente de la première zone de surveillance (110),
- Activation d'une disponibilité pour la première communication lors d'une connexion de communication réussie de la deuxième communication.

12. Procédé (300) selon la revendication 11,
**caractérisé en ce que**
pour initier la deuxième communication, un signal de réveil est émis par le deuxième dispositif de communication (12).

13. Procédé (300) selon la revendication 11 ou 12,
**caractérisé en ce que**
par la première communication, une mesure de distance est effectuée entre le véhicule (1) et le transmetteur d'identification (400) et **en ce qu'**un système de sécurité (200) selon l'une des revendications 1 à 10 est exploité.
